# EUROPEAN PATENT SPECIFICATION

(11) **EP 2 540 925 B1**
(45) Date of publication and mention of the grant of the patent: **30.09.2015**
(21) Application number: 10846537.8
(22) Date of filing: 26.02.2010
(51) Int. Cl.: E04B 1/80, F28D 20/02

(54) **HEAT-INSULATING PANEL FOR USE IN BUILDINGS**
WÄRMEDÄMMPLATTE FÜR GEBÄUDE
PANNEAU D'ISOLATION THERMIQUE DEVANT ÊTRE UTILISÉ DANS DES BÂTIMENTS

(43) Date of publication of application: 02.01.2013
(73) Proprietor: Hitachi, Ltd., Chiyoda-ku Tokyo 100-8280 (JP)
(72) Inventor: UCHIDA, Mari, Tokyo 100-8220 (JP); KOTANI, Masanao, Tokyo 100-8220 (JP); KOMATSU,Tomohiro, Tokyo 100-8220 (JP); KAMOTO, Daigoro, Ibaraki 319-1292 (JP)
(74) Representative: Beetz & Partner mbB
(86) International application number: PCT/JP2010/053133
(87) International publication number: WO 2011/104873

(56) References cited:
- DE-A1-102008 019 717
- JP-A- 7 166 616
- JP-A- 2004 150 539
- JP-A- 2008 240 507

## Description

### TECHNICAL FIELD

The present invention relates to a heat-insulating panel for use in buildings, which has a simple unit structure with excellent heat-insulating performance using latent heat of a latent heat storage material to mitigate heat leakage in a vacuum-insulation material and which is preferably used together with an air-conditioning and hot-water-supply system for new-generation housings, which system includes a refrigerating and air-conditioning circuit using a new refrigerant with a low global warming potential (GWP) and which system has high eco (ecological) effects.

### BACKGROUND ART

In recent years, there has been an urgent need to take measures to suppress global warming, and there has been a request to save energy even in housing environments. In order to satisfy the need and the request, it is desired to secure high heat insulation in housings (buildings) to reduce energy consumption, and it is also desired to secure high efficiency in household electrical appliances and industrial equipment used indoors to reduce energy consumption. In household electrical appliances and industrial equipment, importance is attached to measures to improve heat insulating properties particularly in refrigerators, hot-water tanks of water heaters, etc.

As a well-known technique of the aforementioned heat-insulating panel for use in buildings, which serves to secure high heat insulation in housings to reduce energy consumption, for example, there is a heat-insulating panel (see Patent Literature 1) in which a heat-insulating structure including a plurality of vacuum-insulation pieces arrayed in two lines perpendicularly to a pair of face plates and covered with a foam heat-insulation material is provided in a space portion surrounded by the face plates and a frame in order to reduce the wall thickness of the housing to improve workability while securing high heat-insulation in the housing.

In this heat-insulating panel, the vacuum-insulation pieces in one line are disposed at a smaller interval than the vacuum-insulation pieces in the other line, so that the vacuum-insulation pieces in the other line can compensate the portions where the heat-insulating performance may be relatively lowered between adjacent ones of the vacuum-insulation pieces in the one line (that is, the portions in which there is no vacuum-insulation piece).

A heat-insulating panel having a thin structure using a raw material with a low heat conductivity is generally effective in securing high thermal insulation in a place having a limited thickness, such as a door, in housing environments. On the other hand, in order to secure high thermal insulation in a base portion such as a wall, a ceiling or a floor, it is necessary to increase the thickness when a general-purpose heat-insulation material such as urethane foam, glass wool or the like is used. However, the thickness in the case where a heat-insulation wall including a combination of vacuum-insulation materials excellent in heat-insulating properties is used can be made thinner than that in the case where the general-purpose heat-insulation material is used.

In addition, a vacuum-insulation material and a heat-insulating vessel using the same (see Patent Literature 2) may be cited as the aforementioned vacuum-insulation material that can be applied to household electrical appliances or industrial equipment. The vacuum-insulation material has a structure in which a heat storage cooling material is provided integrally with a jacketing material, which receives a core material and is vacuum-evacuated internally, so as to cover the periphery of the jacketing material.

The vacuum-insulation material has a structure in which the heat storage cooling material is sufficiently utilized to suppress heat bridging generated by heat leakage between high temperature and low temperature parts under usage conditions that undergo changes in temperature. A general vacuum-insulation material is produced as follows. That is, a core material such as glass wool and an adsorbent for adsorbing gas, moisture or the like are enclosed by a jacketing material (external capsule material), and the internal pressure of the jacketing material is reduced to vacuum. The jacketing material is sealed by a method of thermal welding or the like. As a result, a fin portion as a welded portion with a certain width is present externally circumferentially around the vacuum-insulation material. When the jacketing material is processed to have an ordinary shape like a bag, the fin portion formed finally after the encapsulation of the core material etc. and the thermal welding may be longer than any of the other three sides.

In order to keep the inside of the vacuum-insulation material as the reduced pressure state for a long time, it is necessary to design the jacketing material to have a multi-layer structure or the like. The technique of Patent Literature 2 may be also regarded as a mode in which the jacketing material is formed to have a multi-layer structure.

Document DE 10 2008 019717 A1 (VA Q TEC AG [DE], 5 November 2009) discloses a heat insulating panel for use in buildings comprising all the features of the preamble of claim 1.

### CITATION LIST

### PATENT LITERATURE

Patent Literature 1: Japanese Patent No. 3786755
Patent Literature 2: JP-A-2009-299764

### SUMMARY OF INVENTION

### TECHNICAL PROBLEM

The aforementioned heat-insulating panel according to Patent Literature 1 has a structure in which vacuum-insulation materials are arranged in two lines. Thus, the heat-insulating performance is improved.

However, the foam heat-insulation material covering the entire surfaces of the vacuum-insulation materials in this case cannot satisfactorily suppress the heat bridging between adjacent ones of the vacuum-insulation materials disposed at a distance. In order to take measures to solve this problem, a vacuum-insulation material may be disposed to compensate a portion where the heat-insulation performance is relatively lowered (a portion where there is no vacuum-insulation material). In this case, the plate thickness increases due to a laminated structure in which the vacuum-insulation materials covered with the foam heat-insulation material are put on top of each other, so that there is a problem that it is difficult to apply the laminated structure to buildings (housings) whose wall thickness cannot be secured so much.

The vacuum-insulation material according to Patent Literature 2 has a structure in which the entire surface of the jacketing material is covered with the heat storage cooling material. Accordingly, there is indeed an effect of reducing the thermal conductivity of the jacketing material effectively particularly in attaining the heat-insulating effect on an electrical appliance such as a refrigerator (for the purpose of keeping the inside of a heat-insulation box cold).

But the heat storage cooling material formed integrally with the jacketing material in this case must cover the entirety of the jacketing material to secure sealing properties integrally therewith. Therefore, a considerable processing accuracy is required to increase the cost easily, and the thickness of the heat storage cooling material is added to the fin portion formed on at least one side in addition to the thickness of the jacketing material. Thus, when the vacuum-insulation material is applied to a heat-insulating panel for use in buildings so that the buildings can be covered therewith as a heat insulation material, the fin portion cannot be easily folded into a shape along the surface of the heat storage cooling material. Alternatively when an unnecessary portion is removed, a lot of trouble may be taken for the removal process, and the mechanical strength may be lowered so that the weight is increased. Therefore, there is a problem that it is difficult to apply the vacuum-insulation material to the heat-insulating panel for use in buildings.

In addition, in the vacuum-insulation material according to Patent Literature 2, it is difficult to set the thickness of the heat storage cooling material relatively to a body of the vacuum-insulation material in its unit structure. When the thickness of the heat storage cooling material is increased, the heat storage can be increased, but the total weight is also increased correspondingly. It is therefore difficult to use the vacuum-insulation material in applications in which a large number of vacuum-insulation materials having the unit structures are connected in a planar manner and used for covering a wide area as heat-insulating panels for use in buildings.

Therefore, in order not to form a heat storage cooling material integrally with a jacketing material as in Patent Literature 2 but to keep the inside of a vacuum-insulation material as the reduced pressure state stably for a long time and to provide durability in mechanical strength to thereby enhance the applicability as a thin and lightweight heat-insulating panel for use in buildings, a structure in which a fin portion is folded or an unnecessary portion is removed and the surface of the jacketing material is then covered with foil of a metal material such as aluminum foil is under consideration.

However, in the thus formed structure, heat bridging occurs due to heat leakage through the metal material in a periphery portion of the vacuum-insulation material. It is therefore difficult to use the structure as it is. The heat leakage on this occasion varies depending on a basic structure such as the thickness or size of the vacuum-insulation material, the kind or thickness of the foil of the metal material, etc. as well as the usage conditions of the vacuum-insulation material. As a result of experimental observation and theoretical calculation required for the experimental observation, it has been confirmed that the area where the heat bridging occurs ranges over several centimeters around the vacuum-insulation material.

Briefly, when heat-insulating panels for use in buildings (heat-insulating panel) are used in applications in which the heat-insulating panels have existing unit structures each having a combination of a vacuum-insulation material and a heat storage cooling material (or heat-insulation material), cost increases or it takes more time for the development of materials under the present circumstances in order to obtain a vacuum-insulation material by which heat bridging can be reduced. As a result, there is a problem that measures for suppressing the heat bridging cannot be taken efficiently at a low cost and the versatility is poor.

The present invention has been accomplished in order to solve such a problem. A technical object of the invention is to provide a heat-insulating panel for use in buildings, which has high heat insulation effects and which can store heat.

### SOLUTION TO PROBLEM

In order to solve the aforementioned technical problem, a heat-insulating panel for use in buildings according to one basic configuration of the invention includes a vacuum-insulation material, a latent heat storage material which covers a predetermined place of the vacuum-insulation material, and a heat-insulation material which covers the latent heat storage material and the vacuum-insulation material, wherein the latent heat storage material is disposed in a place where heat bridging that results from heat leakage between high temperature and low temperature parts can be mitigated by means of latent heat, as the predetermined place in the vacuum-insulation material. The heat-insulating panel for use in buildings according to this basic configuration of the invention is characterized in that the vacuum-insulation material has a flat plate-like shape, the latent heat storage material is arranged substantially in a frame-like shape extending from one main surface of the vacuum-insulation material, wrapping around a sidewall thereof, and connecting to the other main surface thereof so as to cover an entire peripheral edge of the vacuum-insulation material, and the heat-insulation material is arranged in such a manner that the heat-insulation material covers an entire surface of the latent heat storage material and an entire exposed surface of the vacuum-insulation material.

According to a preferred embodiment the heat-insulating panel for use in buildings includes a plurality of vacuum-insulation materials, a plurality of latent heat storage materials which cover predetermined places of the vacuum-insulation materials respectively, and a heat-insulation material which covers the latent heat storage materials and the vacuum-insulation materials.

In the heat-insulating panel for use in buildings, it is preferable that the latent heat storage materials are disposed in places where heat bridging that results from heat leakage between high temperature and low temperature parts can be mitigated by means of latent heat, respectively, as the predetermined places in the vacuum-insulation materials. In addition, it is preferable that the vacuum-insulation materials have flat plate-like shapes respectively and are disposed in such a manner that the vacuum-insulation materials are not laid on one another in a thickness direction thereof. Further, it is preferable that the vacuum-insulation materials are disposed on one and the same plane.

### ADVANTAGEOUS EFFECTS OF INVENTION

According to the invention, it is possible to obtain a heat-insulating panel for use in buildings, which has sufficiently high heat-insulating effects and can store heat sufficiently.

### BRIEF DESCRIPTION OF DRAWINGS

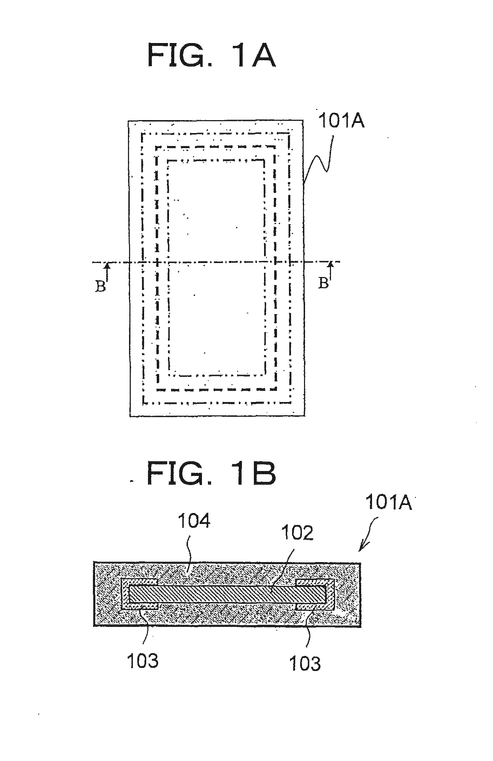

[Figs. 1] Views showing a schematic configuration of a heat-insulating panel for use in buildings according to Example 1 of the invention, in which (A) is a plan view, partially in perspective, of the inside from the top, and (B) is a side sectional view in a lateral direction expressed by the line of arrows B-B in (A).

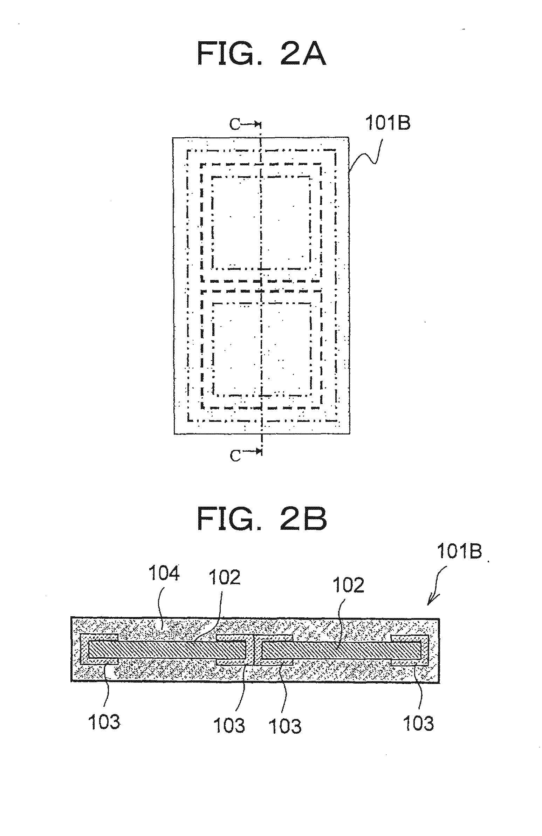

[Figs. 2] Views showing a schematic configuration of a heat-insulating panel for use in buildings according to Example 2 of the invention, in which (A) is a plan view, partially in perspective, of the inside from the top, and (B) is a side sectional view in a longitudinal direction expressed by the line of arrows C-C in (A).

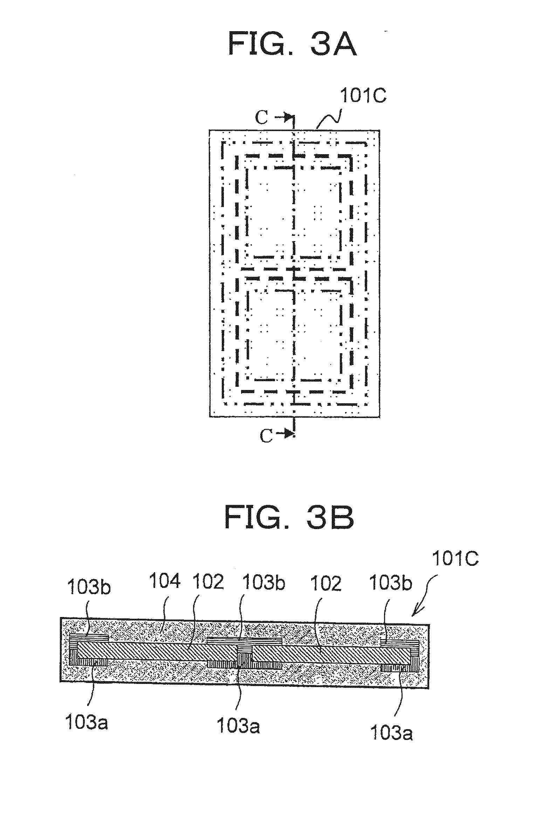

[Figs. 3] Views showing a schematic configuration of a heat-insulating panel for use in buildings according to Example 3 of the invention, in which (A) is a plan view, partially in perspective, of the inside from the top, and (B) is a side sectional view in a longitudinal direction expressed by the line of arrows C-C in (A).

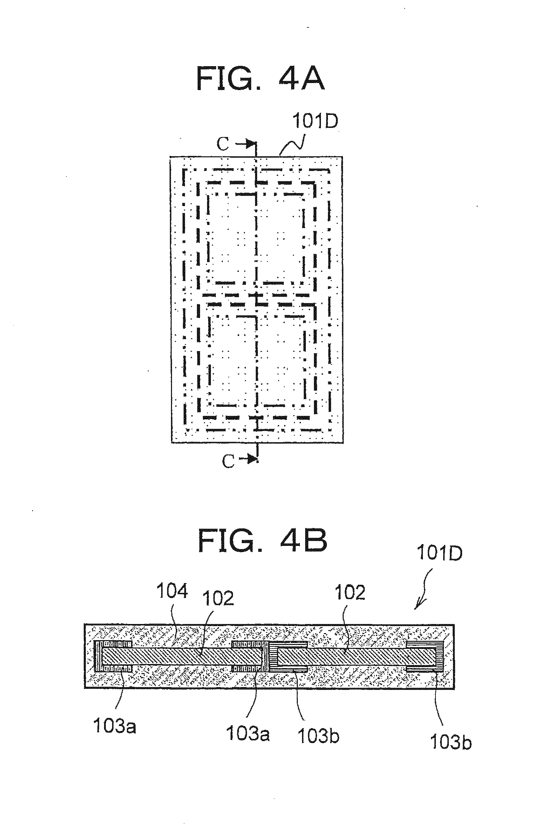

[Figs. 4] Views showing a schematic configuration of a heat-insulating panel for use in buildings according to Example 4 of the invention, in which (A) is a plan view, partially in perspective, of the inside from the top, and (B) is a side sectional view in a longitudinal direction expressed by the line of arrows C-C in (A).

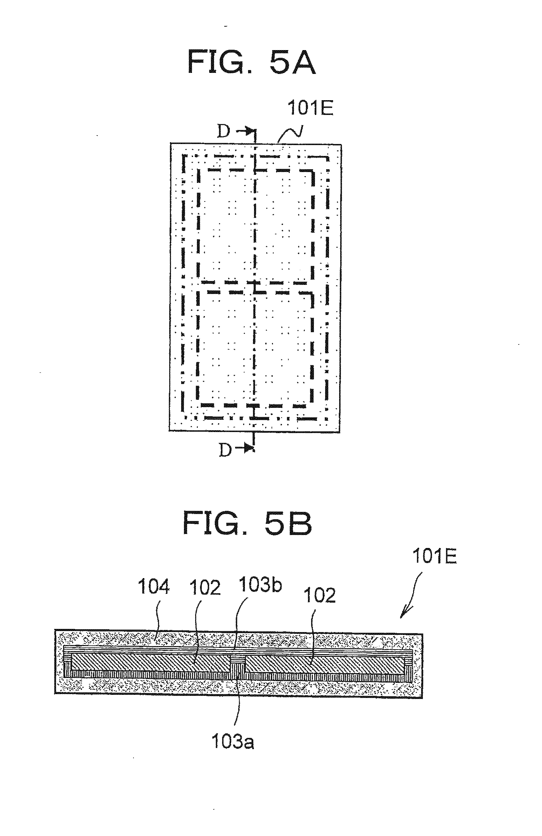

[Figs. 5] Views showing a schematic configuration of a heat-insulating panel for use in buildings according to Example 5 of the invention, in which (A) is a plan view, partially in perspective, of the inside from the top, and (B) is a side sectional view in a longitudinal direction expressed by the line of arrows D-D in (A).

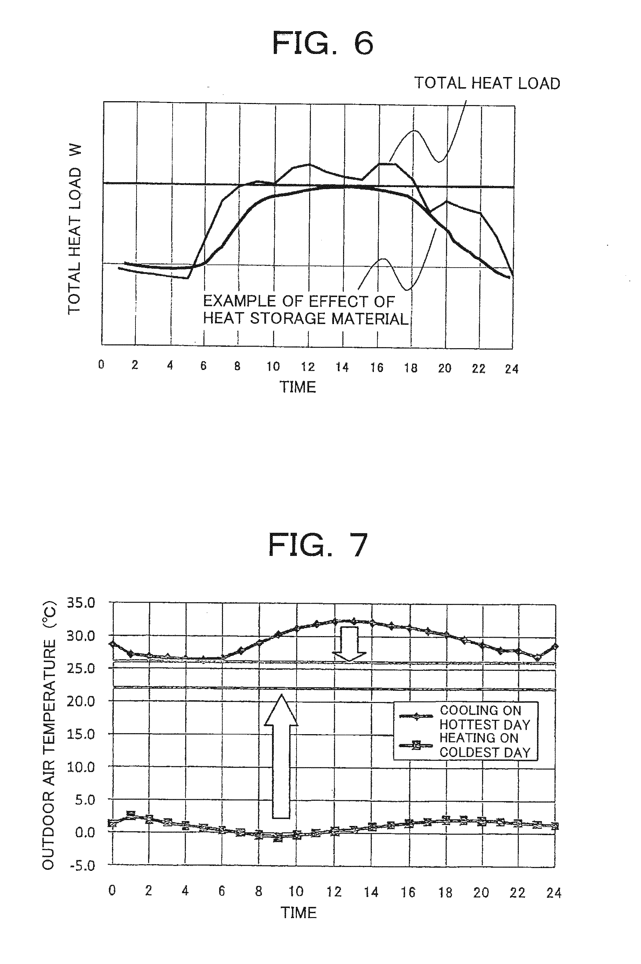

[Fig. 6] A graph showing a total heat load curve on a hottest day for explaining a heat storage effect in which a latent heat storage material as a main part of the heat-insulating panel for use in buildings according to Example 1 of the invention was used for a vacuum-insulation material, by way of example.
[Fig. 7] A graph showing the relation between change in outdoor air temperature and an air conditioning mode of an air conditioner on a hottest day and a coldest day in a mid-latitude region, in which a heat-insulating panel for use in buildings according to each Example of the invention was used, by way of example.

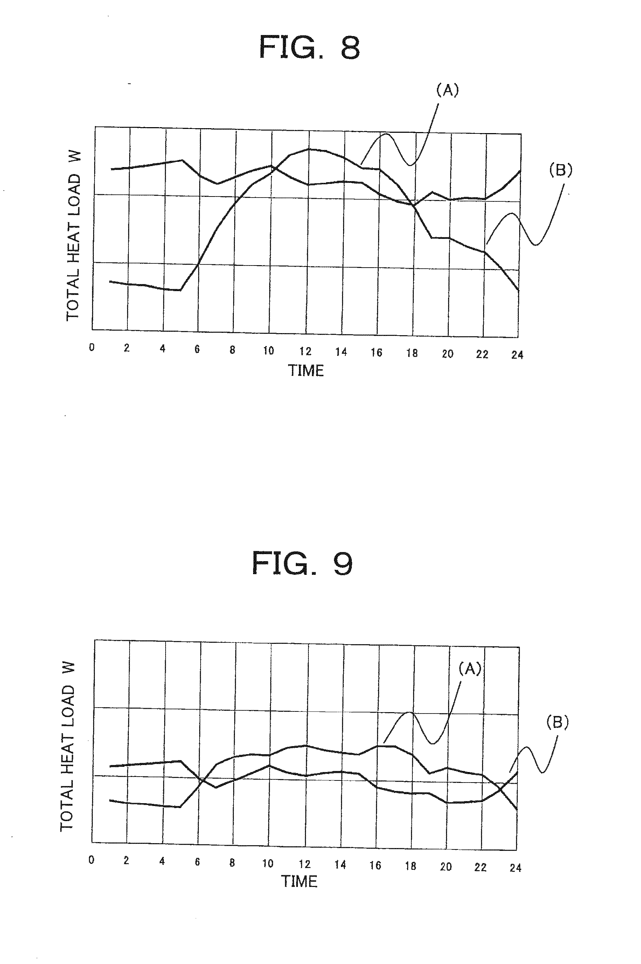

[Fig. 8] A graph showing total heat load curves in a comparative example in which a glass wool material as a core material of a general-purpose vacuum-heating material was used as a heat-insulating panel for use in buildings, in which (A) designates the total heat load curve on a hottest day and (B) designates the total heat load curve on a coldest day.
[Fig. 9] A graph showing total heat load curves in a comparative example in which a well-known vacuum-heating material was used as a heat-insulating panel for use in buildings, in which (A) designates the total heat load curve on a hottest day and (B) designates the total heat load curve on a coldest day.

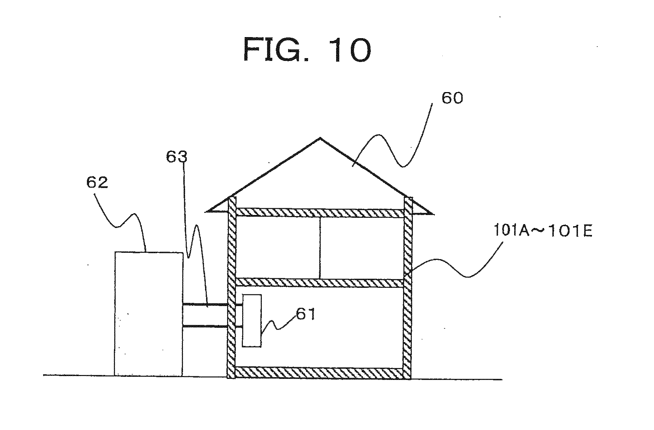

[Fig. 10] A schematic view showing an example in which the heat-insulating panel for use in buildings according to each Example of the invention is applied to a housing in which an air-conditioning and hot-water-supply system is installed.

### DESCRIPTION OF EMBODIMENTS

A heat-insulating panel for use in buildings according to the invention will be described below in detail with reference to the drawings.

First, the technical outline of the heat-insulating panel for use in buildings according to the invention will be described. According to one basic configuration of the heat-insulating panel for use in buildings in the invention, the heat-insulating panel has a vacuum-insulation material, a latent heat storage material which covers a predetermined place of the vacuum-insulation material, and a heat-insulation material which covers the latent heat storage material and the vacuum-insulation material.

Here, it is desirable that the latent heat storage material is disposed in a place where heat bridging that results from heat leakage between high temperature and low temperature parts can be mitigated by means of latent heat, as the predetermined place in the vacuum-insulation material.

According to another basic configuration of the heat-insulating panel for use in buildings in the invention, the heat-insulating panel has a plurality of vacuum-insulation materials, a plurality of latent heat storage materials which cover predetermined places of the vacuum-insulation materials respectively, and a heat-insulation material which covers the latent heat storage materials and the vacuum-insulation materials. Here, it is desirable that the latent heat storage materials are disposed in places where heat bridging that results from heat leakage between high temperature and low temperature parts can be mitigated by means of latent heat, respectively, as the predetermined places in the vacuum-insulation materials. Further, it is preferable that the vacuum-insulation materials have flat plate-like shapes respectively and are disposed not to be laid on one another in a thickness direction thereof. In addition, it is preferable that the vacuum-insulation materials in this case are disposed on one and the same plane.

Specific detailed configurations related to the heat-insulating panel for use in buildings according to the invention will be described below along some Examples.

### Example 1

Figs. 1 are views showing a schematic configuration of a heat-insulating panel 101A for use in buildings according to Example 1 of the invention. Fig. 1(A) is a plan view, partially in perspective, of the inside from the top. Fig. 1(B) is a side sectional view in a lateral direction expressed by the line of arrows B-B in Fig. 1(A).

With reference to Figs. 1(A) and 1(B), the heat-insulating panel 101A for use in buildings has a basic structure obtained by covering the entirety of a flat plate-shaped vacuum-insulation material 102 with a heat-insulation material 104. In addition, the heat-insulating panel 101A for use in buildings is provided with a latent heat storage material 103 that is disposed substantially in a frame-like shape extending from one main surface of the vacuum-insulation material 102, wrapping around the sidewall thereof, and connecting to the other main surface thereof, so as to cover the entire peripheral edge of the vacuum-insulation material 102. The latent heat storage material 103 is provided to use latent heat to mitigate heat bridging that results from heat leakage between high temperature and low temperature parts in the vacuum-insulation material 102 under usage conditions that undergo changes in temperature. The heat-insulation material 104 is arranged in such a manner that the heat-insulation material 104 covers the entire surface of the latent heat storage material 103 and the entire exposed surface of the vacuum-insulation material 102 in this case.

Among these, the vacuum-insulation material 102 has a well-known thin structure in which a fin portion is composed of only a jacketing material (or may have a structure in which a jacketing material is covered with a metal material to improve the mechanical strength), and the fin portion is folded into a shape along the surface of the jacketing material. The same rule may be applied to the subsequent description.

The latent heat storage material 103 disposed around the vacuum-insulation material 102 stores or releases latent heat at the time of phase transition (phase change) between liquid and solid. This characteristic is used to suppress occurrence of heat bridging due to the thermal influence of the vacuum-insulation material 102. It is preferable that an organic heat storage material such as n-Octadecane C₁₈H₃₈, n-Hexadecane C₁₆H₃₄, n-Tetradecane C₁₄H₃₀, or the like belonging to n-paraffins is used as the latent heat storage material 103.

It is preferable to use well-known urethane foam or autoclaved lightweight aerated concrete (ALC) as the heat-insulation material 104.

Assume that heat-insulating panels 101A for use in buildings, each having such a unit structure, are connected and disposed in a planar manner as heat-insulation materials for a housing in which an air conditioner is installed. For example, when the indoor air is heated and kept warm by the air conditioner in winter in this case, each latent heat storage material 103 is normally in a molten state. When the temperature of the latent heat storage material 103 is lower than its freezing temperature due to the warm indoor air and the cold outdoor air, heat begins to leak from the periphery of the latent heat storage material 103. With the heat leakage, the latent heat storage material 103 releases latent heat and begins to be solidified. Here, with the advance of the heat release, the solidification interface (interface between solid and liquid) moves in accordance with the balance between the heat release from the periphery of the latent heat storage material 103 and the latent heat release. Even when the movement of the solidification interface proceeds, the liquid-phase latent heat storage material 103 existing in the peripheral edge of the vacuum-insulation material 102 holds an amount of heat so that the temperature of the vacuum-insulation material 102 can be kept constant till the latent heat storage material 103 is entirely solidified to release heat. The solidified latent heat storage material 103 serves to increase thermal resistance against heat transmission. Thus, the solidified latent heat storage material 103 possesses the effect of reducing the heat leakage of the vacuum-insulation material 102 with the progress of the solidification.

On the other hand, for example, when the indoor air is cooled and kept cool by the air conditioner in summer, the latent heat storage material 103 is normally in a solidified state. On the conditions where the temperature around the latent heat storage material 103 reaches a high temperature not lower than its freezing temperature, the latent heat storage material 103 is melted into a liquid phase and stores heat. At this time, the latent heat storage material 103 is kept at its melting temperature till a set amount of latent heat is stored. Thus, the temperature of the vacuum-insulation material 102 as a target to be kept cool is kept at the melting temperature.

In the vacuum-insulation material 102 having a flat plate-like shape, heat transmission through a path forming heat bridging can be suppressed if a temperature difference at peripheral edge points in the thickness direction can be reduced. For example, assume that a material whose freezing temperature is 18°C is used as the latent heat storage material 103. In this case, the latent heat storage material 103 is melted to store heat when the room temperature is about 20°C to 22°C, and the latent heat storage material 103 is solidified to release heat when the outdoor temperature is about 0°C to 2°C. When the air conditioner engages in heating, the heat-insulating effect is improved greatly so that heat can be stored in the latent heat storage material 103 by excessive heating heat in preparation for decreasing temperature in early morning.

In the heat-insulating panel 101A for use in buildings, with a unit structure in which the latent heat storage material 103 having a substantially frame-like shape is disposed to cover the entire peripheral edge of one vacuum-insulation material 102 in this case, heat generated between high temperature and low temperature parts in the vacuum-insulation material 102 under the usage conditions that undergo changes in temperature is transmitted from one main surface of the vacuum-insulation material 102 not to the other main surface thereof but to the latent heat storage material 103. Since the latent heat storage material 103 serves as a thermal buffer material, the heat bridging can be suppressed satisfactorily.

In this manner, the latent heat storage material 103 absorbs or releases heat so that the flow of heat can be suppressed by latent heat. Thus, the heat-insulating performance of the vacuum-insulation material 102 can be prevented from being lowered, so that the heat-insulating effect of the heat-insulating panel 101A for use in buildings can be enhanced even in applications in which the heat-insulating panels having the unit structures are connected and disposed in a planar manner. In addition, the unit structure of the heat-insulating panel 101A for use in buildings is simple and lightweight, and can be manufactured easily at a low cost. Therefore, the heat-insulating panel 101A for use in buildings is preferable in applications in which excellent heat-insulating effects for new-generation housings with high ecological effects are required.

When the heat-insulating panel 101A for use in buildings according to Example 1 is applied to a housing, it is preferable that a material with a suitable temperature range and a suitable heat storage is selected as the latent heat storage material 103 in accordance with the climate of an area where the housing is located.

### Example 2

Figs. 2 are views showing a schematic configuration of a heat-insulating panel 101B for use in buildings according to Example 2 of the invention. Fig. 2(A) is a plan view, partially in perspective, of the inside from the top. Fig. 2(B) is a side sectional view in a longitudinal direction expressed by the line of arrows C-C in Fig. 2(A).

With reference to Figs. 2(A) and 2(B), the heat-insulating panel 101B for use in buildings has a basic structure in which a plurality of (two in this case) vacuum-insulation materials 102 having flat plate-like shapes and arrayed at predetermined intervals are entirely covered with a heat-insulation material 104. In addition, the heat-insulating panel 101B for use in buildings is provided with a plurality of (two in this case) latent heat storage materials 103 that are arranged substantially in frame-like shapes extending from one main surfaces of the vacuum-insulation materials 102, wrapping around the sidewalls thereof, and connecting to the other main surfaces thereof, so as to cover the entire peripheral edges of the vacuum-insulation materials 102 respectively so that adjacent ones of the latent heat storage materials 103 abut against each other in the side walls. The latent heat storage materials 103 in this case are also provided to use latent heat to mitigate heat bridging that results from heat leakage between high temperature and low temperature parts in the vacuum-insulation materials 102 under usage conditions that undergo changes in temperature, respectively. The heat-insulation material 104 is arranged in such a manner that the heat-insulation material 104 covers the entire surfaces of the latent heat storage materials 103 and the entire exposed surfaces of the vacuum-insulation materials 102 in this case.

In the heat-insulating panel 101B for use in buildings, the vacuum-insulation materials 102, the latent heat storage materials 103 and the heat-insulation material 104 may be composed of materials similar to those disclosed in Example 1.

In the heat-insulating panel 101B for use in buildings, with a unit structure in which the latent heat storage materials 103 arranged substantially in frame-like shapes are disposed to cover the entire peripheral edges of the vacuum-insulation materials 102 respectively in this case, heat generated between high temperature and low temperature parts in each vacuum-insulation material 102 under the usage conditions that undergo changes in temperature is transmitted from one main surface of the vacuum-insulation material 102 not to the other main surface thereof but to corresponding one of the latent heat storage materials 103. Since the latent heat storage materials 103 serves as thermal buffer materials, the heat bridging can be suppressed satisfactorily.

In this manner, each latent heat storage material 103 absorbs or releases heat to suppress the flow of heat by means of latent heat. Accordingly, the heat-insulating performance of each vacuum-insulation material 102 can be prevented from being lowered, so that the heat-insulating effect of the heat-insulating panel 101B for use in buildings can be enhanced even in applications in which the heat-insulating panels with the unit structures are connected and disposed in a planar manner. Particularly in the heat-insulating panel 101B for use in buildings according to Example 2, the heat-insulating performance of the heat-insulation material 104 in a portion where there is no vacuum-insulation material 102 is comparatively lower than that in portions where the vacuum-insulation materials 102 are disposed. The portion is arranged as a place in which the latent heat storage materials 103 abut against each other in the side walls because the influence of heat leakage is considered. It is therefore possible to suppress the lowering of the heat-insulating effect in the heat-insulating panel 101B for use in building as a whole. In addition, the unit structure of the heat-insulating panel 101B for use in buildings in this case is simple and lightweight, and can be manufactured easily at a low cost. Therefore, the heat-insulating panel 101B for use in buildings is preferable in applications in which excellent heat-insulating effects for new-generation housings with high ecological effects are required.

When the heat-insulating panel 101B for use in buildings according to Example 2 is applied to a housing, it is preferable that a material with a suitable temperature range and a suitable heat storage is selected as the latent heat storage materials 103 in accordance with the climate of an area where the housing is located, in the same manner as in Example 1.

### Example 3

Figs. 3 are views showing a schematic configuration of a heat-insulating panel 101C for use in buildings according to Example 3 of the invention. Fig. 3(A) is a plan view, partially in perspective, of the inside from the top. Fig. 3(B) is a side sectional view in a longitudinal direction expressed by the line of arrows C-C in Fig. 3(A).

With reference to Figs. 3(A) and 3(B), the heat-insulating panel 101C for use in buildings has a basic structure in which a plurality of (two in this case) vacuum-insulation materials 102 having flat plate-like shapes and arrayed at predetermined intervals are entirely covered with a heat-insulation material 104. In addition, the heat-insulating panel 101C for use in buildings is provided with a first latent heat storage material 103a arranged substantially in a grid frame-like shape extending from one main surfaces of the vacuum-insulation materials 102 so as to cover thicknesswise halves of the entire peripheral edges of the vacuum-insulation materials 102, and a second latent heat storage material 103b arranged substantially in a grid frame-like shape extending from the other main surfaces of the vacuum-insulation materials 102 so as to cover the other thicknesswise halves of the entire peripheral edges of the vacuum-insulation materials 102 and to be brought into abutment against the first latent heat storage material 103a. In this case, the second latent heat storage material 103b is formed out of another kind of material than that of the first latent heat storage material 103a. Both the first latent heat storage material 103a and the second latent heat storage material 103b are provided to use latent heat to mitigate heat bridging that results from heat leakage between high temperature and low temperature parts in the vacuum-insulation materials 102 under usage conditions that undergo changes in temperature, respectively. The heat-insulation material 104 is arranged in such a manner that the heat-insulation material 104 covers the entire surfaces of the first latent heat storage material 103a and the second latent heat storage material 103b and the entire exposed surfaces of the vacuum-insulation materials 102 in this case.

In the heat-insulating panel 101C for use in buildings, the vacuum-insulation materials 102, the first latent heat storage material 103a, the second latent heat storage material 103b and the heat-insulation material 104 may be composed of materials similar to those disclosed in Example 1. However, the first latent heat storage material 103a and the second latent heat storage material 103b are composed of different materials belonging to n-paraffins as organic heat storage materials, as described above.

In the heat-insulating panel 101C for use in buildings, with a unit structure in which the first latent heat storage material 103a and the second latent heat storage material 103b composed of different materials and having shapes connecting to each other substantially like grid frames to cover the entire peripheral edges of the vacuum-insulation materials 102 respectively in this case are disposed to be brought into abutment against each other from the opposite main surface sides of the vacuum-insulation materials 102 respectively, heat generated between high temperature and low temperature parts in each vacuum-insulation material 102 under the usage conditions that undergo changes in temperature is transmitted from one main surface of the vacuum-insulation material 102 not to the other main surface thereof but to corresponding one of the first latent heat storage material 103a and the second latent heat storage material 103b. Since the first latent heat storage material 103a and the second latent heat storage material 103b serve as thermal buffer materials, the heat bridging can be suppressed satisfactorily.

In this manner, the first latent heat storage material 103a and the second latent heat storage material 103b absorb or release heat so that the flow of heat can be suppressed by latent heat. Accordingly, the heat-insulating performance of each vacuum-insulation material 102 can be prevented from being lowered, so that the heat-insulating effect of the heat-insulating panel 101C for use in buildings can be enhanced even in applications in which the heat-insulating panels with the unit structures are connected and disposed in a planar manner. Particularly in the heat-insulating panel 101C for use in buildings according to Example 3, the first latent heat storage material 103a and the second latent heat storage material 103b composed of different materials are used. Accordingly, heat can be absorbed or released in their temperature ranges, for example, when the second latent heat storage material 103b is disposed on the indoor side and the first latent heat storage material 103a is disposed on the outdoor side. Thus, there is a merit that it is possible to elongate the time for which the first latent heat storage material 103a and the second latent heat storage material 103b can serve as thermal buffer materials. In addition, the unit structure of the heat-insulating panel 101C for use in buildings in this case is simple and lightweight, and can be manufactured easily at a low cost. Therefore, the heat-insulating panel 101C for use in buildings is preferable in applications in which excellent heat-insulating effects for new-generation housings with high ecological effects are required.

When the heat-insulating panel 101C for use in buildings according to Example 3 is applied to a housing, it is preferable that materials with suitable temperature ranges and suitable heat storages are selected as the first latent heat storage material 103a and the second latent heat storage material 103b in accordance with the climate of an area where the housing is located, in the same manner as in the case of Example 1 or Example 2. In the heat-insulating panel 101C for use in buildings according to Example 3, whose structure is different from that in the case of Example 1 or Example 2 in which each latent heat storage material 103 is composed of one and the same material, there are plenty of materials for selection so that selection in accordance with the climate of the area can be made. Thus, the applicability can be enhanced.

### Example 4

Figs. 4 are views showing a schematic configuration of a heat-insulating panel 101D for use in buildings according to Example 4 of the invention. Fig. 4(A) is a plan view, partially in perspective, of the inside from the top. Fig. 4(B) is a side sectional view in a longitudinal direction expressed by the line of arrows C-C in Fig. 4(A).

With reference to Figs. 4(A) and 4(B), the heat-insulating panel 101D for use in buildings has a basic structure in which a plurality of (two in this case) vacuum-insulation materials 102 having flat plate-like shapes and arrayed at predetermined intervals are entirely covered with a heat-insulation material 104. In addition, the heat-insulating panel 101D for use in buildings is provided with a first latent heat storage material 103a and a second latent heat storage material 103b which are composed of a plurality of (two in this case) different materials are disposed substantially in frame-like shapes extending from one main surfaces of the vacuum-insulation materials 102, wrapping around the sidewalls thereof, and connecting to the other main surfaces thereof, so as to cover the entire peripheral edges of the vacuum-insulation materials 102 respectively so that the first and second latent heat storage materials 103a and 103b adjacent to each other abut against each other in the side walls. The first latent heat storage material 103a and the second latent heat storage material 103b are also provided to use latent heat to mitigate heat bridging that results from heat leakage between high temperature and low temperature parts in the vacuum-insulation materials 102 under usage conditions that undergo changes in temperature, respectively. The heat-insulation material 104 is arranged in such a manner that the heat-insulation material 104 covers the entire surfaces of the first latent heat storage material 103a and the second latent heat storage material 103b and the entire exposed surfaces of the vacuum-insulation materials 102 in this case.

In the heat-insulating panel 101D for use in buildings, the vacuum-insulation materials 102, the first latent heat storage material 103a, the second latent heat storage material 103b and the heat-insulation material 104 may be composed of materials similar to those disclosed in Example 1. However, the first latent heat storage material 103a and the second latent heat storage material 103b are composed of different materials belonging to n-paraffins as organic heat storage materials, as described above.

In the heat-insulating panel 101D for use in buildings, with a unit structure in which the first latent heat storage material 103a and the second latent heat storage material 103b composed of different materials and having shapes substantially like frames to cover the entire peripheral edges of the vacuum-insulation materials 102 respectively in this case are disposed respectively, heat generated between high temperature and low temperature parts in each vacuum-insulation material 102 under the usage conditions that undergo changes in temperature is transmitted from one main surface of the vacuum-insulation material 102 not to the other main surface thereof but to corresponding one of the first latent heat storage material 103a and the second latent heat storage material 103b. Since the first latent heat storage material 103a and the second latent heat storage material 103b serve as thermal buffer materials, the heat bridging can be suppressed satisfactorily.

In this manner, the first latent heat storage material 103a and the second latent heat storage material 103b absorb or release heat so that the flow of heat can be suppressed by latent heat. Accordingly, the heat-insulating performance of each vacuum-insulation material 102 can be prevented from being lowered, so that the heat-insulating effect of the heat-insulating panel 101D for use in buildings can be enhanced even in applications in which the heat-insulating panels with the unit structures are connected and disposed in a planar manner. Particularly in the heat-insulating panel 101D for use in buildings according to Example 4, the heat-insulating performance of the heat-insulation material 104 in a portion where there is no vacuum-insulation material 102 is comparatively lower than that in portions where the vacuum-insulation materials 102 are disposed. This portion is arranged as a place in which the first latent heat storage material 103a and the second latent heat storage material 103b are brought into abutment against each other in the side walls because the influence of heat leakage is considered. It is therefore possible to suppress the lowering of the heat-insulating effect in the heat-insulating panel 101D for use in buildings as a whole. In addition, since the first latent heat storage material 103a and the second latent heat storage material 103b which are composed of different materials are used, heat can be absorbed or released in their temperature ranges, for example, when the side wall opposite to the abutment side of the first latent heat storage material 103a is disposed closely to the roof or the ceiling and the side wall opposite to the abutment side of the second latent heat storage material 103b is disposed closely to the floor. Thus, there is a merit that it is possible to elongate the time for which the first latent heat storage material 103a and the second latent heat storage material 103b can serve as thermal buffer materials. In addition, the unit structure of the heat-insulating panel 101D for use in buildings in this case is simple and lightweight, and can be manufactured easily at a low cost. Therefore, the unit structure of the heat-insulating panel 101D for use in buildings is preferable in applications in which excellent heat-insulating effects for new-generation housings with high ecological effects are required.

When the heat-insulating panel 101D for use in buildings according to Example 4 is applied to a housing, it is preferable that materials with suitable temperature ranges and suitable heat storages are selected as the first latent heat storage material 103a and the second latent heat storage material 103b in accordance with the climate of an area where the housing is located, in the same manner as in the aforementioned Examples. In the heat-insulating panel 101D for use in buildings according to Example 4, whose structure is different from that in the case of Example 1 or Example 2 in which each latent heat storage material 103 is composed of one and the same material, there are plenty of materials for selection so that selection in accordance with the climate of the area can be made. Thus, the applicability can be enhanced.

### Example 5

Figs. 5 are views showing a schematic configuration of a heat-insulating panel 101E for use in buildings according to Example 5 of the invention. Fig. 5(A) is a plan view, partially in perspective, of the inside from the top. Fig. 5(B) is a side sectional view in a longitudinal direction expressed by the line of arrows D-D in Fig. 5(A).

With reference to Figs. 5(A) and 5(B), the heat-insulating panel 101E for use in buildings has a basic structure in which a plurality of (two in this case) vacuum-insulation materials 102 having flat plate-like shapes and arrayed at predetermined intervals are entirely covered with a heat-insulation material 104. In addition, the heat-insulating panel 101E for use in buildings is provided with a first latent heat storage material 103a arranged in a shape extending substantially like a partition box from one main surfaces of the vacuum-insulation materials 102 so as to cover thicknesswise halves of the entire surfaces thereof including the entire peripheral edges thereof respectively, and a second latent heat storage material 103b arranged in a shape extending substantially like a partition box from the other main surfaces of the vacuum-insulation materials 102 so as to cover the other thicknesswise halves of the entire surfaces thereof including the entire peripheral edges thereof respectively and to be brought into abutment against the first latent heat storage material 103a respectively. In this case, the second latent heat storage material 103b is formed out of a different kind of material from that of the first latent heat storage material 103a. Both the first latent heat storage material 103a and the second latent heat storage material 103b are provided to use latent heat to mitigate heat bridging that results from heat leakage between high temperature and low temperature parts in the vacuum-insulation materials 102 under usage conditions that undergo changes in temperature, respectively. The heat-insulation material 104 is arranged in such a manner that the heat-insulation material 104 covers the entire surfaces of the first latent heat storage material 103a and the second latent heat storage material 103b in this case.

In the heat-insulating panel 101E for use in buildings, the vacuum-insulation materials 102, the first latent heat storage material 103a, the second latent heat storage material 103b and the heat-insulation material 104 may be composed of materials similar to those disclosed in Example 1. However, the first latent heat storage material 103a and the second latent heat storage material 103b are composed of different materials belonging to n-paraffins as organic heat storage materials, as described above.

In the heat-insulating panel 101E for use in buildings, with a unit structure in which the first latent heat storage material 103a and the second latent heat storage material 103b composed of different materials and having shapes extending substantially like partition boxes to cover thicknesswise halves of the entire surfaces of the vacuum-insulation materials 102 including the entire peripheral edges thereof respectively in this case are disposed to be brought into abutment against each other from the opposite main surface sides of the vacuum-insulation materials 102 respectively, heat generated between high temperature and low temperature parts in each vacuum-insulation material 102 under the usage conditions that undergo changes in temperature is transmitted from one main surface of the vacuum-insulation material 102 not to the other main surface thereof but to corresponding one of the first latent heat storage material 103a and the second latent heat storage material 103b. Since the first latent heat storage material 103a and the second latent heat storage material 103b serve as thermal buffer materials, the heat bridging can be suppressed satisfactorily.

In this manner, the first latent heat storage material 103a and the second latent heat storage material 103b absorb or release heat so that the flow of heat can be suppressed by latent heat. Thus, the heat-insulating performance of each vacuum-insulation material 102 can be prevented from being lowered, so that the heat-insulating effect of the heat-insulating panel 101E for use in buildings can be enhanced even in applications in which the heat-insulating panels with the unit structures are connected and disposed in a planar manner. Particularly in the heat-insulating panel 101E for use in buildings according to Example 5, the first latent heat storage material 103a and the second latent heat storage material 103b composed of different materials are used. Accordingly, heat can be absorbed or released in their temperature ranges, for example, when the second latent heat storage material 103b is disposed on the indoor side and the first latent heat storage material 103a is disposed on the outdoor side, in the same manner as in Example 3. Thus, there is a merit that it is possible to elongate the time for which the first latent heat storage material 103a and the second latent heat storage material 103b can serve as thermal buffer materials. In addition, both the first latent heat storage material 103a and the second latent heat storage material 103b composed of different materials entirely cover the vacuum-insulation materials 102 from the opposite main surface sides thereof respectively, so that the lowering of the heat-insulating performance of the vacuum-insulation materials 102 can be suppressed more satisfactorily than that in the case of Example 3. It is therefore possible to contribute to reduction in the air conditioning load of an air conditioner. In addition, the unit structure of the heat-insulating panel 101E for use in buildings in this case is simple and lightweight, and can be manufactured easily at a low cost. Therefore, the unit structure of the heat-insulating panel 101E for use in buildings is preferable in applications in which excellent heat-insulating effects for new-generation housings with high ecological effects are required.

When the heat-insulating panel 101E for use in buildings according to Example 5 is applied to a housing, it is preferable that materials with suitable temperature ranges and suitable heat storages are selected as the first latent heat storage material 103a and the second latent heat storage material 103b in accordance with the climate of an area where the housing is located, in the same manner as in the aforementioned Examples. In the heat-insulating panel 101E for use in buildings according to Example 5, whose structure is different from that in the case of Example 1 or Example 2 in which each latent heat storage material 103 is composed of one and the same material, there are plenty of materials for selection so that selection in accordance with the climate of the area can be made in the same manner as in the case of Example 3. Thus, the applicability can be enhanced. In addition, the effect of suppressing the lowering of the heat-insulating performance of each vacuum-insulation material 102 is the highest among the Examples. Thus, the heat-insulating panel 101E for use in buildings according to Example 5 can be effectively applied to any place of the housing, such as the indoor side, the outdoor side, the side close to the ceiling, and the side close to the floor.

As for the heat-insulating panels 101A to 101E for use in buildings according to the aforementioned Examples (particularly the heat-insulating panel 101B for use in buildings according to Example 2, the heat-insulating panel 101C for use in buildings according to Example 3 and the heat-insulating panel 101E for use in buildings according to Example 5), the forms where the first latent heat storage material 103a and the second latent heat storage material 103b composed of different materials from the latent heat storage material 103 are disposed around the vacuum-insulation materials 102 may be roughly classified into the case where heat storage materials are used as they are and the case where materials similar to heat storage board materials are used.

When a heat storage material is used as it is, it is possible to use the heat storage material formed in such a manner that a predetermined amount of the heat storage material is charged into a vessel and molded into a predetermined shape, it is possible to use the heat storage material charged into a casing molded into a predetermined shape, or it is possible to use the heat storage material received in a casing disposed on the surface of a component molded as a spacer. Here, the heat storage material charged into the vessel or the casing storing the heat storage material may have either an integral structure or a split structure.

On the other hand, when a material similar to a heat storage board material is used, it is possible to use the material in such a manner that a material obtained by dispersing microcapsules enclosing the heat storage material into a member is molded, or it is possible to use a board-like member impregnated with the heat storage material. In any case, it is preferable that the heat storage material is brought into close contact with the vacuum-heat material 102 and the heat-insulation material 104.

When such a form is applied, the heat storage material serves as a spacer or a positioning member when the heat-insulating panels 101A to 101E for use in buildings (particularly the heat-insulating panel 101B for use in buildings, the heat-insulating panel 101C for use in buildings and the heat-insulating panel 101E for use in buildings) are assembled. Thus, manufacturing can be made easily.

In order to simplify description, the heat storage effect of the latent heat storage material (PCM) 103 provided on the vacuum-insulation material (VIP) 102 in the heat-insulating panel 101a for use in buildings according to Example 1 will be described below along with its characteristic graph.

Fig. 6 is a graph showing a total heat load curve on a hottest day for explaining the heat storage effect when the latent heat storage material 103 as a main part of the heat-insulating panel 101A for use in buildings according to Example 1 of the invention was used for the vacuum-insulation material 102, by way of example. The biggest reason why the latent heat storage material 103 disposed on the vacuum-insulation material 102 is used as the heat-insulating panel 101A for use in buildings is because it has an advantage that the temperature of the wall of a housing can be prevented from increasing in summer.

For example, assume that the total heat load curve designating the characteristic of a total heat load (W) at each hour on the hottest day is drawn in Fig. 6. In this case, the latent heat storage material 103 shows a total heat load characteristic as an example of the PCM effect shown in Fig. 6 when the density is 800 kg/m³, the latent heat is 242 kJ/kg and the temperature is 25°C. The total Qc of the total heat load beyond 4 kW from 6 o'clock to 18 o'clock on the hottest day reaches 10,693.9 (kJ).

Assume that the total area of a portion to be thermally insulated in a standard housing is 260.75 m² (the roof or ceiling is 67.90 m², the wall is 124.95 m², and the first floor is 67.90 m²). In order to cover 80% of the area with vacuum-insulation materials 102 measuring 0.8 m by 0.8 m in this case, about 209 pieces of vacuum-insulation materials 102 are required. In order to cover 90% with the same vacuum-insulation materials 102 in this case, about 235 pieces of vacuum-insulation materials 102 are required.

When the width of an edge portion where heat bridging may occur in each vacuum-insulation material 102 is 0.05 m, heat storage Qpcm by the latent heat storage materials 103 arranged around the vacuum-insulation materials 102 varies in accordance with correlation between the thickness, volume and weight of the latent heat storage materials 103 and the number of the vacuum-insulation materials 102 in use.

Specifically, assume that the thickness of each latent heat storage material 103 is 0.001 m, the volume thereof is 0.0003 m³, the weight thereof is 0.24 kg, and the number of the vacuum-insulation materials 102 in use is 200. In this case, the heat storage Qpcm is 11,616 kJ. When the thickness of each latent heat storage material 103 is 0.005 m, the volume thereof is 0.0015 m³, the weight thereof is 1.2 kg, and the number of the vacuum-insulation materials 102 in use is 200, the heat storage Qpcm is 58,080 kJ. When the thickness of each latent heat storage material 103 is 0.01 m, the volume thereof is 0.003 m³, the weight thereof is 2.4 kg, and the number of the vacuum-insulation materials 102 in use is 200, the heat storage Qpcm is 116,160 kJ. When the thickness of each latent heat storage material 103 is 0.01 m, the volume thereof is 0.003 m³, the weight thereof is 2.4 kg, and the number of the vacuum-insulation materials 102 in use is 100, the heat storage Qpcm is 58,080 kJ.

From these results, it is understood that the latent heat storage materials 103 whose thickness is 0.01 m (10 mm) have heat storage about 10 times as large as the aforementioned total Qc of the total heat load. Thus, in consideration of the heat storage, a peak is shifted to level the load so that the total of the heat load can be reduced when stored heat is released to the outside at night.

Fig. 7 is a graph showing the relation between change in outdoor air temperature and an air conditioning mode of an air conditioner on a hottest day and a coldest day in a mid-latitude region (Tokyo), in which each of the heat-insulating panels 101A to 101E for use in buildings according to the Examples of the invention was used, by way of example.

Each heat-insulating panel 101A to 101E for use in buildings according to the aforementioned Examples shows correlation with an air-conditioning mode of an air conditioner in accordance with the location conditions of a housing the heat-insulating panel 101A to 101E for use in buildings is generally applied to. Fig. 7 shows an example in which the indoor air was cooled with the room temperature set at about 26°C by the air conditioner on the hottest day in Tokyo, and the indoor air was heated with the room temperature set at about 22°C by the air conditioner on the coldest day. It is understood that the temperature difference between the outdoor air temperature and the room temperature varies between winter and summer. Paying attention to this point, it is preferable that the kind of material having a temperature range effective in suppressing heat bridging is selected as the latent heat storage material 103 or each of the first latent heat storage material 103 a and the second latent heat storage material 103b arranged in a peripheral portion of the vacuum-insulation material 102, and the kind of material having a temperature range suitably for serving as a heat storage material is selected as the latent heat storage material 103 or each of the first latent heat storage material 103a and the second latent heat storage material 103b arranged in the other portion.

Fig. 8 is a graph showing total heat load curves in a comparative example in which a glass wool material as a core material of a general-purpose vacuum-insulation material 102 was used as a heat-insulating panel for use in buildings, in which (A) designates the total heat load curve on a hottest day and (B) designates the total heat load curve on a coldest day.

Fig. 8 shows each total heat load characteristic at each hour when the temperature set for heating the indoor air is 22°C and the temperature set for cooling the indoor air is 25°C. Heat loads are calculated by SMASH (numerical calculation program of heat load for housing) using a standard housing model of Architectural Institute of Japan. The overall heat transmission coefficient K=λ/t is 0.42 when the thickness t of the heat-insulating panel for use in buildings is 90 mm and the λ of the glass wool is 0.038 W/mK on this occasion.

Fig. 9 is a graph showing total heat load curves in a comparative example in which a well-known vacuum-heating material 102 was used as a heat-insulating panel for use in buildings, in which (A) designates the total heat load curve on a hottest day and (B) designates the total heat load curve on a coldest day.

Similarly, Fig. 9 also shows each total heat load characteristic at each hour when the temperature set for heating the indoor air is 22°C and the temperature set for cooling the indoor air is 25°C. Heat loads are calculated by SMASH (numerical calculation program of heat load for housing) using a standard housing model of Architectural Institute of Japan. The overall heat transmission coefficient K=λ/t is 0.2 when the thickness of the vacuum-insulation material 102 is 20 mm, the thickness of the heat-insulation material 104 is 70 mm and the λ of the heat-insulating panel for use in buildings is 0.018 W/mK on this occasion.

Compare (A) and (B) in Fig. 8 with (A) and (B) in Fig. 9. When the vacuum-insulation material 102 is used as a heat-insulating panel for use in buildings, the overall heat transmission coefficient K can be lowered. It is therefore understood that it is preferable to increase the proportion of the vacuum-insulation material 102 to thereby mitigate the influence of heat bridging. When the vacuum-insulation material 102 is used as a heat-insulating panel for use in buildings, an air conditioner with low heat exchanging capacity may be selected and used as the air conditioner. However, the air conditioner has to have performance with high heat exchanging capacity in order to rapidly reduce the room temperature rising due to long absence in summer.

Fig. 10 is a schematic view showing an example in which each heat-insulating panel 101A to 101E for use in buildings according to each Example of the invention is applied to a housing 60 in which an air-conditioning and hot-water-supply system 62 is installed.

The air-conditioning and hot-water-supply system 62 (details of overall configuration thereof is omitted) in this case is installed outdoors and connected to an indoor heat exchanger 61 through a piping system 63. A heating medium whose temperature has been adjusted by the air-conditioning and hot-water-supply system 62 flows into the indoor heat exchanger 61 through the piping system 63. Due to heat exchange between the heating medium and the air inside the housing 60 at that time, the air in the housing 60 can be conditioned.

The housing 60 is provided with a selected one of the heat-insulating panels 101A to 101E for use in buildings which panels have high heat-insulating effects and heat storage properties as described in the Examples. Thus, the heat-insulating performance of the housing 60 itself is enhanced. That is, the indoor air is not so hot in summer and not so cold in winter. Under such usage conditions, the housing 60 can have high eco (ecological) effects. It is therefore possible to reduce an air-conditioning load required in the air-conditioning and hot-water-supply system 62 installed in the housing. Examples of refrigerants that can be used in the air-conditioning and hot-water-supply system 62 include R410a, R134a, HFO1234yf, HFO1234ze, etc. Examples of heat sources that can be used for air-conditioning or hot water supply in the air-conditioning and hot-water-supply system 62 include natural energy such as solar heat, ground heat, etc. as well as the air.

### DESCRIPTION OF REFERENCE SIGNS LIST

- 60: housing (space to be air-conditioned)
- 61: indoor heat exchanger
- 62: air-conditioning and hot-water-supply system
- 63: duct
- 101A-101E: heat-insulating panel for use in buildings
- 102: vacuum-insulation material
- 103,103a,103b: latent heat storage material
- 104: heat-insulation material

## Claims

1. A heat-insulating panel for use in buildings comprising:
a vacuum-insulation material (102);
a latent heat storage material (103, 103a, 103b) which covers a predetermined place of the vacuum-insulation material (102); and
a heat-insulation material (104) which covers the latent heat storage material (103, 103a, 103b) and the vacuum-insulation material (102),
wherein the latent heat storage material (103, 103a, 103b) is disposed in a place where heat bridging that results from heat leakage between high temperature and low temperature parts can be mitigated by means of latent heat, as the predetermined place in the vacuum-insulation material (102),
and wherein
the vacuum-insulation material (102) has a flat plate-like shape;
**characterized in that** the latent heat storage material (103, 103a, 103b) is arranged substantially in a frame-like shape extending from one main surface of the vacuum-insulation material (102), wrapping around a sidewall thereof, and connecting to the other main surface thereof so as to cover an entire peripheral edge of the vacuum-insulation material (102); and
the heat-insulation material (104) is arranged in such a manner that the heat-insulation material (104) covers an entire surface of the latent heat storage material (103, 103a, 103b) and an entire exposed surface of the vacuum-insulation material (102).

2. A heat-insulating panel for use in buildings according to claim 1, **characterized by** comprising:
a plurality of vacuum-insulation materials (102);
a plurality of latent heat storage materials (103, 103a, 103b) which cover predetermined places of the vacuum-insulation materials (102) respectively; and
a heat-insulation material (104) which covers the latent heat storage materials (103, 103a, 103b) and the vacuum-insulation materials (102).

3. A heat-insulating panel for use in buildings according to Claim 2, **characterized in that**:
the vacuum-insulation materials (102) have flat plate-like shapes respectively and are arranged in such a manner that the vacuum-insulation materials (102) are not laid on one another in a thickness direction thereof.

4. A heat-insulating panel for use in buildings according to Claim 3, **characterized in that**:
the vacuum-insulation materials (102) are disposed on one and the same plane.

5. A heat-insulating panel for use in buildings according to Claim 4, **characterized in that**:
the vacuum-insulation materials (102) are arrayed at predetermined intervals;
the latent heat storage materials (103, 103a, 103b) are arranged substantially in frame-like shapes extending from one main surfaces of the vacuum-insulation materials, wrapping around sidewalls thereof, and connecting to the other main surfaces thereof, so as to cover entire peripheral edges of the vacuum-insulation materials (102), respectively so that adjacent ones of the latent heat storage materials abut against each other in the side walls; and
the heat-insulation material (104) is arranged in such a manner that the heat-insulation material (104) covers entire surfaces of the latent heat storage materials (103, 103a, 103b) and entire exposed surfaces of the vacuum-insulation materials (104).

6. A heat-insulating panel for use in buildings according to Claim 5, **characterized in that**:
adjacent ones of the latent heat storage materials (103a, 103b) brought into abutment against each other are formed out of different kinds of materials.

7. A heat-insulating panel for use in buildings according to Claim 4, **characterized in that**:
the vacuum-insulation materials (102) are arrayed at predetermined intervals;
the latent heat storage materials includes a first latent heat storage material (103a) which is arranged in a shape extending from one main surfaces of the vacuum-insulation materials and connecting substantially like a grid frame so as to cover thicknesswise halves of entire peripheral edges thereof respectively, and a second latent heat storage material (103b) which is arranged in a shape extending from the other main surfaces of the vacuum-insulation materials and connecting substantially like a grid frame so as to cover the other thicknesswise halves of the entire peripheral edges thereof respectively and to be brought into abutment against the first latent heat storage material (103a), the second latent heat storage material (103b) being formed out of another kind of material than that of the first latent heat storage material; and
the heat-insulation material (104) is arranged in such a manner that the heat-insulation material covers entire surfaces of the first latent heat storage material and the second latent heat storage material and entire exposed surfaces of the vacuum-insulation materials.

8. A heat-insulating panel for use in buildings according to Claim 4, **characterized in that**:
the vacuum-insulation materials (102) are arrayed at predetermined intervals;
the latent heat storage materials include a first latent heat storage material (103a) which is arranged substantially in a partition box-like shape extending from one main surfaces of the vacuum-insulation materials (102) so as to cover thicknesswise halves of entire surfaces thereof including entire peripheral edges thereof respectively, and a second latent heat storage material (103b) which is arranged substantially in a partition box-like shape extending from the other main surfaces of the vacuum-insulation materials (102) so as to cover the other thicknesswise halves of the entire surfaces thereof including the entire peripheral edges thereof respectively and to be brought into abutment against the first latent heat storage material (103a), the second latent heat storage material(103b) being formed out of another kind of material than that of the first latent heat storage material; and
the heat-insulation material (104) is arranged in such a manner that the heat-insulation material covers entire surfaces of the first latent heat storage material and the second latent heat storage material.

## Patentansprüche

1. Wärmeisolationsplatte zur Verwendung in Gebäuden, die aufweist:
ein Vakuumisolationsmaterial (102),
ein Material (103, 103a, 103b) zur Speicherung latenter Wärme, das eine vorgegebene Stelle des Vakuumisolationsmaterials (102) bedeckt, und
ein Wärmeisolationsmaterial (104), das das Material (103, 103a, 103b) zur Speicherung latenter Wärme und das Vakuumisolationsmaterial (102) bedeckt,
wobei das Material (103, 103a, 103b) zur Speicherung latenter Wärme als vorgegebene Stelle in dem Vakuumisolationsmaterial (102) an einer Stelle angeordnet ist, an der die Wärmebrückenbildung, die aus einer Wärmeleitung zwischen Teilen, die sich auf hoher Temperatur befinden, und Teilen, die sich auf niedriger Temperatur befinden, resultiert, mittels latenter Wärme abgeschwächt werden kann,
und wobei das Vakuumisolationsmaterial (102) eine flache plattenförmige Gestalt aufweist,
**dadurch gekennzeichnet, dass**
das Material (103, 103a, 103b) zur Speicherung latenter Wärme im Wesentlichen in einer rahmenähnlichen Form ausgebildet ist, die sich so von einer Hauptfläche des Vakuumisolationsmaterials (102) weg erstreckt, eine von dessen Seitenwänden umhüllt und an die andere Hauptfläche anschließt, dass eine Außenkannte des Vakuumisolationsmaterials (102) vollständig bedeckt ist, und
das Wärmeisolationsmaterial (104) so angeordnet ist, dass das Wärmeisolationsmaterial (104) die gesamte Oberfläche des Materials (103, 103a, 103b) zur Speicherung latenter Wärme und die gesamte freiliegende Oberfläche des Vakuumisolationsmaterials (102) bedeckt.

2. Wärmeisolationsplatte zur Verwendung in Gebäuden nach Anspruch 1, **dadurch gekennzeichnet, dass** sie aufweist:
mehrere Vakuumisolationsmaterialien (102),
mehrere Materialien (103, 103a, 103b) zur Speicherung latenter Wärme, die jeweils vorgegebene Stellen der Vakuumisolationsmaterialien (102) bedecken, und
ein Wärmeisolationsmaterial (104), das die Materialien (103, 103a, 103b) zur Speicherung latenter Wärme und die Vakuumisolationsmaterialien (102) bedeckt.

3. Wärmeisolationsplatte zur Verwendung in Gebäuden nach Anspruch 2, **dadurch gekennzeichnet, dass**:
die Vakuumisolationsmaterialien (102) jeweils eine flache plattenförmige Gestalt aufweisen und so angeordnet sind, dass die Vakuumisolationsmaterialien (102) in deren Dickenrichtung nicht aufeinander liegen.

4. Wärmeisolationsplatte zur Verwendung in Gebäuden nach Anspruch 3, **dadurch gekennzeichnet, dass**:
die Vakuumisolationsmaterialien (102) in ein und derselben Ebene angeordnet sind.

5. Wärmeisolationsplatte zur Verwendung in Gebäuden nach Anspruch 4, **dadurch gekennzeichnet, dass**:
die Vakuumisolationsmaterialien (102) mit vorgegebenen Abständen angeordnet sind,
die Materialien (103, 103a, 103b) zur Speicherung latenter Wärme jeweils im Wesentlichen in rahmenähnlichen Formen ausgebildet sind, die sich so von einer Hauptfläche der jeweiligen Vakuumisolationsmaterialien (102) weg erstrecken, deren Seitenwände umhüllen und an deren andere Hauptflächen anschließen, dass die Außenkannten der Vakuumisolationsmaterialien (102) vollständig bedeckt sind, sodass einander benachbarte Materialien zur Speicherung latenter Wärme an den Seitenwänden aneinanderstoßen, und
das Wärmeisolationsmaterial (104) so angeordnet ist, dass das Wärmeisolationsmaterial (104) die gesamten Oberflächen der Materialien (103, 103a, 103b) zur Speicherung latenter Wärme und die gesamten freiliegenden Oberflächen des Vakuumisolationsmaterials (102) bedeckt.

6. Wärmeisolationsplatte zur Verwendung in Gebäuden nach Anspruch 5, **dadurch gekennzeichnet, dass**:
einander benachbarte, aneinanderstoßend angeordnete Materialien (103a, 103b) zur Speicherung latenter Wärme aus unterschiedlichen Materialarten gebildet sind.

7. Wärmeisolationsplatte zur Verwendung in Gebäuden nach Anspruch 4, **dadurch gekennzeichnet, dass**:
die Vakuumisolationsmaterialien (102) mit vorgegebenen Abständen angeordnet sind,
die Materialien zur Speicherung latenter Wärme ein erstes Material zur Speicherung latenter Wärme (103a), das in einer Form ausgebildet ist, die sich von den einen der Hauptflächen der Vakuumisolationsmaterialien weg erstreckt und im Wesentlichen eine Gitterrahmenverbindung bildet, die von deren jeweiligen Außenkanten eine Dickenhälfte durchgehend bedeckt, und ein zweites Material zur Speicherung latenter Wärme (103b) aufweisen, das in einer Form ausgebildet ist, die sich von den anderen der Hauptflächen der Vakuumisolationsmaterialien weg erstreckt und im Wesentlichen eine Gitterrahmenverbindung bildet, die von deren jeweiligen Außenkanten die andere Dickenhälfte durchgehend bedeckt und an das erste Material (103a) zur Speicherung latenter Wärme anstoßend angeordnet ist, wobei das zweite Material (103b) zur Speicherung latenter Wärme aus einer anderen Materialart gebildet ist, als das erste Material zur Speicherung latenter Wärme, und
das Wärmeisolationsmaterial (104) so ausgebildet ist, dass das Wärmeisolationsmaterial die gesamten Oberflächen des ersten Materials zur Speicherung latenter Wärme und des zweiten Materials zur Speicherung latenter Wärme, sowie die gesamten freiliegenden Oberflächen des Vakuumisolationsmaterials bedeckt.

8. Wärmeisolationsplatte zur Verwendung in Gebäuden nach Anspruch 4, **dadurch gekennzeichnet, dass**:
die Vakuumisolationsmaterialien (102) mit vorgegebenen Abständen angeordnet sind,
die Materialien zur Speicherung latenter Wärme ein erstes Material zur Speicherung latenter Wärme (103a), das im Wesentlichen in Form eines Unterteilungen aufweisenden Gehäuses ausgebildet ist, das sich so von den einen der Hauptflächen der Vakuumisolationsmaterialien (102) weg erstreckt, dass deren gesamten Oberflächen einschließlich der vollständigen Außenkanten jeweils zur Hälfte der Dicke bedeckt sind, und ein zweites Material zur Speicherung latenter Wärme (103b) aufweisen, das im Wesentlichen in Form eines Unterteilungen aufweisenden Gehäuses ausgebildet ist, das sich so von den anderen der Hauptflächen der Vakuumisolationsmaterialien (102) weg erstreckt, dass deren gesamten Oberflächen einschließlich der vollständigen Außenkanten jeweils zur Hälfte der Dicke bedeckt sind, und an das erste Material (103a) zur Speicherung latenter Wärme anstoßend angeordnet ist, wobei das zweite Material (103b) zur Speicherung latenter Wärme aus einer anderen Materialart gebildet ist, als das erste Material zur Speicherung latenter Wärme, und
das Wärmeisolationsmaterial (104) so angeordnet ist, dass das Wärmeisolationsmaterial die gesamten Oberflächen des ersten Materials zur Speicherung latenter Wärme und des zweiten Materials zur Speicherung latenter Wärme bedeckt.

## Revendications

1. Panneau isolant thermique à utiliser dans des bâtiments comprenant :
un matériau d'isolation sous vide (102) ;
un matériau de stockage de chaleur latente (103, 103a, 103b) qui couvre un endroit prédéterminé du matériau d'isolation sous vide (102) ; et
un matériau d'isolation thermique (104) qui couvre le matériau de stockage de chaleur latente (103, 103a, 103b) et le matériau d'isolation sous vide (102),
dans lequel le matériau de stockage de chaleur latente (103, 103a, 103b) est disposé à un endroit où la formation de ponts thermiques qui résulte de la déperdition de chaleur entre des parties de haute température et de basse température peut être atténuée au moyen de chaleur latente, en tant qu'étant l'endroit prédéterminé dans le matériau d'isolation sous vide (102),
et dans lequel
le matériau d'isolation sous vide (102) a une forme plate semblable à une plaque;
**caractérisé en ce que**
le matériau de stockage de chaleur latente (103, 103a, 103b) est agencé sensiblement en une forme semblable à un cadre s'étendant depuis une surface principale du matériau d'isolation sous vide (102), s'enveloppant autour d'une paroi latérale de celui-ci, et se reliant à l'autre surface principale de celui-ci de façon à couvrir un bord périphérique entier du matériau d'isolation sous vide (102) ; et
le matériau d'isolation thermique (104) est agencé de telle manière que le matériau d'isolation thermique (104) couvre une surface entière du matériau de stockage de chaleur latente (103, 103a, 103b) et une surface exposée entière du matériau d'isolation sous vide (102).

2. Panneau isolant thermique à utiliser dans des bâtiments selon la revendication 1, **caractérisé en ce qu'**il comprend :
une pluralité de matériaux d'isolation sous vide (102) ;
une pluralité de matériaux de stockage de chaleur latente (103, 103a, 103b) qui couvrent des endroits prédéterminés des matériaux d'isolation sous vide (102) respectivement ; et
un matériau d'isolation thermique (104) qui couvre les matériaux de stockage de chaleur latente (103, 103a, 103b) et les matériaux d'isolation sous vide (102).

3. Panneau isolant thermique à utiliser dans des bâtiments selon la revendication 2, **caractérisé en ce que** :
les matériaux d'isolation sous vide (102) ont des formes plates semblables à une plaque respectivement et sont agencés de telle manière que les matériaux d'isolation sous vide (102) ne soient pas posés les uns sur les autres dans un sens de l'épaisseur de ceux-ci.

4. Panneau isolant thermique à utiliser dans des bâtiments selon la revendication 3, **caractérisé en ce que** :
les matériaux d'isolation sous vide (102) sont disposés sur un seul et même plan.

5. Panneau isolant thermique à utiliser dans des bâtiments selon la revendication 4, **caractérisé en ce que** :
les matériaux d'isolation sous vide (102) sont disposés à des intervalles prédéterminés ;
les matériaux de stockage de chaleur latente (103, 103a, 103b) sont agencés sensiblement sous des formes semblables à un cadre s'étendant depuis une surface principale des matériaux d'isolation sous vide, s'enveloppant autour de parois latérales de ceux-ci, et se reliant aux autres surfaces principales de ceux-ci, de façon à couvrir des bords périphériques entiers des matériaux d'isolation sous vide (102), respectivement de sorte que des matériaux adjacents parmi les matériaux de stockage de chaleur latente viennent en butée les uns contre les autres dans les parois latérales ; et
le matériau d'isolation thermique (104) est agencé de telle manière que le matériau d'isolation thermique (104) couvre des surfaces entières des matériaux de stockage de chaleur latente (103, 103a, 103b) et des surfaces exposées entières des matériaux d'isolation sous vide (104).

6. Panneau isolant thermique à utiliser dans des bâtiments selon la revendication 5, **caractérisé en ce que** :
des matériaux adjacents parmi les matériaux de stockage de chaleur latente (103, 103a, 103b) amenés en butée les uns contre les autres sont formés de différents types de matériaux.

7. Panneau isolant thermique à utiliser dans des bâtiments selon la revendication 4, **caractérisé en ce que** :
les matériaux d'isolation sous vide (102) sont disposés à des intervalles prédéterminés ;
les matériaux de stockage de chaleur latente incluent un premier matériau de stockage de chaleur latente (103a) qui est agencé en une forme s'étendant depuis une surface principale des matériaux d'isolation sous vide et se reliant sensiblement comme un cadre de type grille de façon à couvrir des moitiés dans le sens de l'épaisseur de bords périphériques entiers de ceux-ci respectivement, et un second matériau de stockage de chaleur latente (103b) qui est agencé en une forme s'étendant depuis les autres surfaces principales des matériaux d'isolation sous vide et se reliant sensiblement comme un cadre de type grille de façon à couvrir les autres moitiés dans le sens de l'épaisseur des bords périphériques entiers de ceux-ci respectivement et à être amené en butée contre le premier matériau de stockage de chaleur latente (103a), le second matériau de stockage de chaleur latente (103b) étant formé d'un autre type de matériau que celui du premier matériau de stockage de chaleur latente ; et
le matériau d'isolation thermique (104) est agencé de telle manière que le matériau d'isolation thermique couvre des surfaces entières du premier matériau de stockage de chaleur latente et du second matériau de stockage de chaleur latente et des surfaces exposées entières des matériaux d'isolation sous vide.

8. Panneau isolant thermique à utiliser dans des bâtiments selon la revendication 4, **caractérisé en ce que** :
les matériaux d'isolation sous vide (102) sont disposés à des intervalles prédéterminés ;
les matériaux de stockage de chaleur latente incluent un premier matériau de stockage de chaleur latente (103a) qui est agencé sensiblement en une forme semblable à une boîte de cloisonnement s'étendant depuis une surface principale des matériaux d'isolation sous vide (102) de façon à couvrir des moitiés dans le sens de l'épaisseur de surfaces entières de ceux-ci incluant des bords périphériques entiers de ceux-ci respectivement, et un second matériau de stockage de chaleur latente (103b) qui est agencé sensiblement en une forme semblable à une boîte de cloisonnement s'étendant depuis les autres surfaces principales des matériaux d'isolation sous vide (102) de façon à couvrir les autres moitiés dans le sens de l'épaisseur des surfaces entières de ceux-ci incluant les bords périphériques entiers de ceux-ci respectivement et à être amené en butée contre le premier matériau de stockage de chaleur latente (103a), le second matériau de stockage de chaleur latente (103b) étant formé d'un autre type de matériau que celui du premier matériau de stockage de chaleur latente ; et
le matériau d'isolation thermique (104) est agencé de telle manière que le matériau d'isolation thermique couvre des surfaces entières du premier matériau de stockage de chaleur latente et du second matériau de stockage de chaleur latente.
